# EUROPEAN PATENT SPECIFICATION

(11) **EP 3 967 527 B1**
(45) Date of publication and mention of the grant of the patent: **12.03.2025**
(21) Application number: 21195499.5
(22) Date of filing: 08.09.2021
(51) Int. Cl.: B60C 23/04

(54) **TIRE SENSOR CONFIGURING DEVICE AND SMART TIRE SYSTEM INCLUDING THE SAME**
REIFENSENSORKONFIGURIERUNGSVORRICHTUNG UND INTELLIGENTES REIFENSYSTEM DAMIT
DISPOSITIF DE CONFIGURATION DE CAPTEUR DE PNEU ET SYSTÈME DE PNEU INTELLIGENT LE COMPRENANT

(30) Priority: 14.09.2020 KR 20200117887
(43) Date of publication of application: 16.03.2022
(73) Proprietor: Kumho Tire Co., Inc., Gwangju 62392 (KR)
(72) Inventor: KIM, Hyungseok, Yongin-si, Gyeonggi-do 17076 (KR); KIM, Hyounjung, Yongin-si, Gyeonggi-do 17076 (KR)
(74) Representative: BCKIP Part mbB

(56) References cited:
- EP-A1- 1 946 945
- FR-A1- 2 971 469
- JP-A- 2004 322 833
- US-A2- 2015 273 955

## Description

### TECHNICAL FIELD

The present invention relates to a tire sensor configuring device and a smart tire system including the same.

### BACKGROUND

Recently, as an automobile-based technology, research on fuel efficiency, driver convenience, and driving stability improvement is being actively conducted. In particular, active vehicle body stabilization devices such as a tire pressure monitoring system (TPMS), an anti-brake system (ABS), and an electronic stability program (ESP) are becoming common, autonomous vehicles are becoming common, and thus, technologies for more effectively measuring road surface information and tire condition information are researched.

For example, a smart tire system that monitors a condition of a tire by attaching a sensor module to an inside of the tire is a representative example.

In such a smart tire system, a tire air pressure, a temperature, or the like is measured using the sensor module, tire state information is stored on a server or in a cloud, and thus, data on tires of multiple vehicles may be collected and managed at once. Meanwhile, in the case of the sensor module in the smart tire system, since the sensor module is attached to an inner liner of the tire, weight and size of the sensor module are limited. Moreover, in preparation for contamination that may occur inside the tire, the sensor module should be completely packed and manufactured. Accordingly, the sensor module has a problem in that it is difficult to provide a separate power supply as hardware.

In addition, in order for the data collected by the sensor module to be efficiently managed on a server or the like, information on a communication module mounted on the sensor module, tire, and vehicle should be transmitted to the server using a protocol that can be handled or managed by the server.

JP 2004-322833 discloses an on-vehicle receiver provided with a reception part for receiving data from a transmitter which is mounted on a rim to transmit tire intrinsic information together with tire state information, and a tire intrinsic information storing part for storing the tire intrinsic information.

US 2015/273955 A2 discloses a method for managing data relating to an assembly comprising a tyre, carrying an RFID marker, and a rim, carrying a wheel module including at least one sensor. The assembly can be in different states, notably a mounted state in which the tyre is mounted on the rim to form a mounted assembly, also called a wheel, intended to be fitted to a motor vehicle. According to this method, data are transmitted between the RFID marker and the wheel module via an intermediate unit, separate from the mounted assembly and the motor vehicle, comprising data transmission means. These data, called RFID data, are stored in the wheel module. The wheel module comprises at least one sensor of the pressure of the tyre, and the RFID data stored in the wheel module are erased when the pressure detected by the pressure sensor is less than or equal to a predetermined pressure threshold.

FR 2971469 A1 discloses a method involving transmitting data associated with an identifier to a measurement module by an intermediate unit that is separated from a wheel assembly and a vehicle, where the identifier includes a radio frequency identification (RFID) type tag. Pressure drop in a tire is detected by the measurement module. The data are erased by replacing new data from another tire during pressure drop. The pressure drop over a given period is measured before carrying out the erasing process.

EP 1 946 945 A1 discloses a vehicle monitoring system which can readily identify information transmitted from each detecting device without requiring registration of identifying information of the detecting device. Detecting devices transmit vehicle information including at least the result of detection and self-identifying information; a tractor relaying device and a trailer relaying device add their self-identifying information to vehicle data received on the basis of the identifying information of the detecting devices or and transmit the vehicle data, and transmit registration data including their own relaying device IDs and types indicating the registration of the relaying device IDs; the tractor relaying device stores the relaying device ID of the registration data transmitted from the trailer relaying device on the basis of the type information and transmits that registration data, and transmits vehicle data received from the trailer relaying device on the basis of the relaying device ID. The display device receives the registration data and the vehicle data transmitted from the tractor relaying device, and stores the relaying device ID of the registration data on the basis of type information.

### SUMMARY

An embodiment of the present invention is directed to providing a smart tire system including a tire sensor configuring device that operates a sensor module attached to a tire of a vehicle to manage information on the tire in a field of a smart tire system.

In addition, an embodiment of the present invention is directed to forming a packet including the tire information according to a protocol that can be handled by a smart tire management server constituting the smart tire system and providing the packet to the smart tire management server.

In accordance with a first embodiment of the present invention, there is provided a tire sensor configuring device including: a transceiver configured to receive a communication module identification code of a communication module provided in a vehicle to communicate with a smart tire management server, tire identification codes of a plurality of tires mounted to the vehicle, and sensor identification codes of sensor modules respectively attached to the plurality of tires; and a controller configured to arrange the communication module identification code, the tire identification codes, and the sensor identification codes according to a protocol previously created in association with the smart tire management server to form a packet, wherein the transceiver is configured to transmit the packet to the communication module.

The packet may further include location information of the plurality of tires.

The protocol may define a location where the tire identification code and the sensor identification code are stored in the packet for each tire.

The transceiver may include: a transmitter configured to transmit a communication module identification code request signal to the communication module; and a receiver configured to receive the communication module identification code transmitted from the communication module in accordance with the communication module identification code request signal, wherein the receiver is configured to receive the sensor identification code and the tire identification code after the receiver receives the communication module identification code.

The transmitter is configured to transmit a power signal for operating the sensor module to the sensor module after the receiver receives the communication module identification code. In accordance with a second embodiment of the present invention, there is provided a smart tire system including: a communication module communicating with a smart tire management server, provided in a vehicle including a plurality of tires, and configured to store a communication module identification code; a sensor module provided in each of the plurality of tires and storing a sensor identification code; a tag provided in each of the plurality of tires and storing a tire identification code; and a tire sensor configuring device communicating with the communication module, the sensor module, and the tag, wherein the tire sensor configuring device includes: a controller configured to arrange the communication module identification code transmitted from the communication module, the sensor identification code transmitted from the sensor module, and the tire identification code transmitted from the tag according to a protocol previously created in association with the smart tire management server to form a packet; and a transceiver configured to transmit the packet to the communication module.

The protocol may define a location where the tire identification code and the sensor identification code are stored in the packet for each tire.

According to the protocol previously created in the tire sensor configuring device included in the smart tire system according to the embodiment of the present invention, the packet for storing a sensor identification code of the sensor module and a tire identification code of the tire is formed, the packet is transmitted to the smart tire management server, and thus, the data of the tire can be efficiently managed by the smart tire management server.

The transmitter includes an LF transmitter, a communication unit of the sensor module includes an LF receiver, and thus, the sensor module can be operated without providing a separate power supply in the sensor module.

### BRIEF DESCRIPTION OF THE DRAWINGS

FIG. 1 is a view schematically showing a smart tire system according to an embodiment of the present invention.
FIG. 2 is a block diagram of a tire sensor configuring device according to the embodiment of the present invention.
FIG. 3 is a diagram showing a protocol formed by the tire sensor configuring device according to the embodiment of the present invention.

### DETAILED DESCRIPTION

Hereinafter, specific embodiments for implementing the present invention will be described in detail with reference to the drawings.

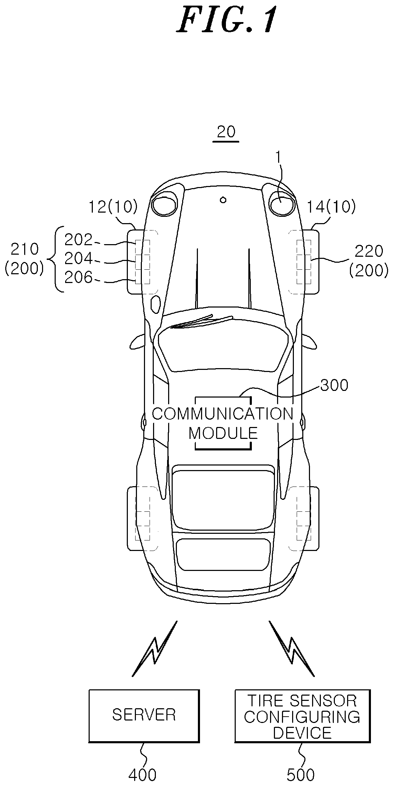

Hereinafter, a smart tire system 20 according to the invention will be described with reference to FIGS. 1 to 3.

Referring to FIG. 1, the smart tire system 20 according to the invention may include a plurality of sensor modules 200, a communication module 300, a smart tire management server 400, and a tire sensor configuring device 500.

The plurality of sensor modules 200 may be each provided at a plurality of tires 10 provided in a vehicle 1. The sensor module 200 may be mounted on an inner liner of each tire 10. The sensor module 200 collects tire data such as a temperature, an acceleration, and a wear state of the tire 10 and transmits the tire data to the communication module 300 attached to the vehicle 1. As shown in FIG. 1, the vehicle 1 is shown as a vehicle including four tires 10, but the invention is not limited thereto.

In addition, each of the plurality of sensor modules 200 may store different sensor identification codes, and when the sensor module 200 is operated by the tire sensor configuring device 500, the sensor module 200 may transmit the sensor identification code to the tire sensor configuring device 500.

According to the above, the sensor module 200 may include a sensor unit 202, a communication unit 204, and a sensor storage unit 206.

The sensor unit 202 collects tire data such as the temperature, acceleration, and wear state of the tire 10. The sensor unit 202 can be driven by a separate power supply.

The communication unit 204 transmits tire data to the communication module 300 or the sensor identification code to the tire sensor configuring device 500. The communication unit 204 may include a long frequency (LF) receiver that communicates with a long frequency method. Accordingly, when the communication unit 204 receives a power signal transmitted from the tire sensor configuring device 500, the LF receiver generates a wake-up signal, and power is applied according to the wake-up signal to operate the sensor module 200. Therefore, the communication unit 204 may transmit the sensor identification code to the tire sensor configuring device 500.

The sensor storage unit 206 may store the sensor identification code, and may store tire data collected from the sensor unit 202 as the sensor module 200 operates. Here, the sensor storage unit 206 may include a memory such as a dynamic random access memory (DRAM) or a NAND.

For example, among the plurality of sensor modules 200, a first sensor module 210 attached to a first tire 12 may include a first sensor identification code, and a second sensor module 220 attached to a second tire 14 may include a second sensor identification code. In this case, when a power signal is transmitted to the LF receiver of the first sensor module 210, the first sensor identification code stored in the sensor storage unit 206 of the first sensor module 210 may be transmitted to the tire sensor configuring device 500 through the communication unit 204 of the first sensor module 210. Then, when the power signal is transmitted to the LF receiver of the second sensor module 220, the second sensor identification code of the sensor storage unit 206 of the second sensor module 220 may be transmitted to the tire sensor configuration device 500 through the communication unit 204 of the second sensor module 220.

The communication module 300 is installed in the vehicle 1, and serves to transmit/receive data on a plurality of tires 10 to/from the smart tire management server 400 or to/from the tire sensor configuring device 500. For example, the communication module 300 receives a packet formed in accordance with a protocol P from the tire sensor configuring device 500 and transmits the packet to the smart tire management server 400. For example, the communication module 300 and the smart tire management server 400 may communicate in a long-term evolution (LTE) manner and may communicate in a radio frequency (RF) manner with the tire sensor configuring device 500, but the present invention is not limited thereto.

Here, the protocol refers to various communication protocols established to facilitate an exchange of information between devices. Accordingly, the protocol applied to the invention may define a location in which the tire identification code and the sensor identification code are stored in the packet P for each of a plurality of tires 10. This will be described in detail below.

In addition, the communication module 300 may include a unique communication module identification code.

As the smart tire management server 400 communicates with the communication module 300 mounted on the vehicle 1, the smart tire management server 400 may receive the packet P configured according to a protocol from the tire sensor configuring device 500. In addition, the smart tire management server 400 may manage the tire data included in the packet P for each vehicle, and may provide information related to the tire data to a user of the vehicle 1.

The tire sensor configuring device 500 controls the plurality of sensor modules 200, communicates with the plurality of sensor modules 200 in order to configure the plurality of sensor modules 200, and forms the packet P according to a protocol to transmit the packet P to the smart tire management server 400.

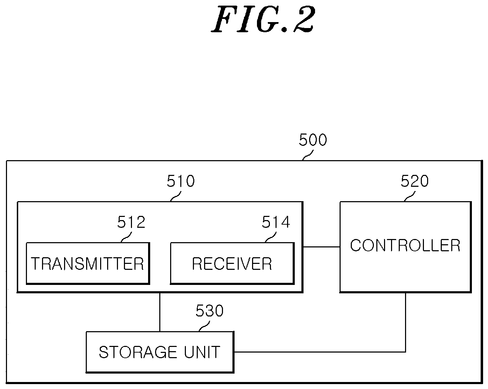

Referring to FIG. 2, the tire sensor configuring device 500 may include a transceiver 510 and a controller 520, and a storage unit 530.

The transceiver 510 receives the communication module identification code of the communication module 300, the tire identification code of each tire 10, and the sensor identification code of each sensor module 200, and transmits the packet formed by the controller 520 to the communication module 300 again. A tag for storing a tire identification code may be formed at each of the plurality of tires 10, and the tag may include a radio frequency identification (RFID) tag to communicate with the transceiver 510.

The transceiver 510 may include a transmitter 512 and a receiver 514.

The transmitter 512 transmits various signals to the communication module 300 and the sensor module 200 to receive a plurality of sensor identification codes and a plurality of tire identification codes as the transmitter 512 controlled by the controller 520. Specifically, the transmitter 512 may send a communication module identification code request signal to the communication module 300, and when the communication module identification code transmitted from the communication module 300 is received by the receiver 514, the transmitter 512 may be controlled by the controller 520 to sequentially transmit a power signal for operating the sensor module 200 to the plurality of sensor modules 200.

The transmitter 512 may include an LF transmitter that communicates with the LF receiver of each sensor module 200, and according to a protocol definition, the power signal may be transmitted to a plurality of sensor modules 200 by the LF transmitter. In addition, the transmitter 512 may further include a radio frequency (RF) transmitter, a long-term evolution (LTE) modem, and the like. In particular, as described above, since the protocol can define the location where the tire identification code and the sensor identification code are stored in the packet P for each tire or for each tire location, the power signal may be sequentially transmitted to the plurality of sensor modules 200 according to the order of tire locations defined in the protocol.

According to the above, the transmitter 512 is controlled by the controller 520 according to the protocol definition, and first transmits the power signal to the first sensor module 210 to operate the first sensor module 210. After the first sensor identification code is received by the receiver 514, the transmitter 512 may transmit the power signal to the second sensor module 220 to operate the second sensor module 220 so that the second sensor identification code is received. Accordingly, the receiver 514 may sequentially receive the sensor identification code and tire identification code for each tire, and the sensor identification code and tire identification code may be stored in the packet P formed by the controller in the order received by the receiver 514. In addition, the transmitter 512 may transmit the packet P formed by the controller 520 to the communication module 300 according to the protocol definition.

The receiver 514 may receive the identification code from tags provided in the communication module 300, the plurality of sensor modules 200, and the plurality of tires 10. Accordingly, the receiver 514 may receive the communication module identification code transmitted from the communication module 300, and may receive the sensor identification code transmitted from the sensor module 200 operated by the power signal and the tire identification code of the tire to which the operated sensor module is attached.

The receiver 514 may include an RFID communication unit 204 that communicates with a tag attached to the tire to receive a tire identification code. The RFID communication unit 204 may be activated by the controller 520.

Accordingly, the receiver 514 may sequentially receive the plurality of sensor identification codes and the plurality of tire identification codes according to the power signal sequentially transmitted according to the protocol definition from the transmitter 512.

For example, when the receiver 514 receives the first sensor identification code of the first sensor module 210 that has received the power signal, the receiver 514 is controlled by the controller 520 and communicates with the tag of the first tire 12 to which the first sensor module 210 is attached, and thus, the receiver 514 may receive the first tire identification code. Then, when the receiver 514 receives the second sensor identification code of the second sensor module 220 that has received the power signal, the receiver 514 is controlled by the controller 520 and communicates with the tag of the second tire 14 to which the second sensor module 220 is attached, and thus, the receiver 514 may receive the second tire identification code.

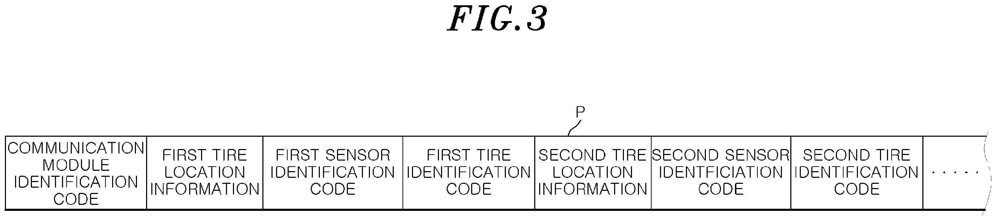

The controller 520 controls the transceiver 510, and according to the protocol previously negotiated with the smart tire management server 400, the controller 520 forms the location information of the plurality of tires 10, the communication module identification code, the plurality of sensor identification codes, the packet P storing the plurality of tire identification codes, as shown in FIG. 3.

Accordingly, the controller 520 may form the packet P for storing the plurality of sensor identification codes, the plurality of tire identification codes, and the plurality of tire location information received from the receiver 514 for each tire location in the order of protocol definition, and transmit the packet P to the communication module 300.

Moreover, the controller 520 may allocate information to each of a plurality of location information.

Here, allocation information may include numbers or letters. For example, a number assigned to the location information of the first tire may be set to No. 1, and a number assigned to the location information of the second tire may be set to No. 2. When the allocation information includes characters, a character assigned to the first tire location information may be stored as a character representing a front left, and a character assigned to the second tire location information may be stored as a character representing a front right.

In addition, each allocation information may correspond to each location where the tire identification code and the sensor identification code are stored in the packet P for each of the plurality of tires defined in the protocol.

According to the above, the controller 520 may control the transmitter 512 to sequentially transmit the power signal to the plurality of sensor modules 200 based on the plurality of allocation information in order to store the location information of the tire, the sensor identification code, and the tire identification code in the packet P according to the protocol.

For example, the controller 520 may control the transmitter 512 to first transmit the power signal to the first sensor module 210 of the first tire 12 having location information corresponding to the allocation number 1 in the order of the allocation number, and after the first sensor identification code and the first tire identification code are received through the receiver 514, may control the transmitter 512 to transmit the power signal to the second sensor module 220 attached to the second tire 14 having the location information corresponding to the allocation number 2.

As a result, as the power signals are sequentially transmitted to the plurality of sensor modules 200 in the order of the allocation numbers and the plurality of sensor identification codes and the plurality of tire identification codes are also sequentially received, as shown in FIG. 3, the packet P stores the first received communication module identification code in the receiver 514, and thereafter, according to the definition of the protocol, may store the location information of the first tire, the first identification code number, the first tire identification code, and the location information of the second tire, the second identification code number, and the second tire identification code.

Also, when calling any one of the plurality of allocation information, the controller 520 may extract tire location information, sensor identification code, and tire identification code corresponding to the allocation information called in the packet P. For example, when the allocation number 1 is called, the location information of the first tire 12, the first sensor identification code, and the first tire identification code stored in the packet P may be extracted.

Hereinafter, a sequence of forming the packet P according to the protocol of the tire sensor configuring device 500 according to the embodiment of the present invention will be described. In addition, it will be described that the allocation information is stored as a number. However, the present invention is not limited thereto, and it is applicable even when the allocation information is formed in characters.

First, the transmitter 512 of the tire sensor configuring device 500 transmits the communication module identification code request signal to the communication module 300 attached to the vehicle 1, and accordingly, the communication module 300 may transmit the communication module identification code stored therein to the receiver 514 of the tire sensor configuring device 500.

As the communication module identification code is received, the controller 520 may store the communication module identification code in the packet P.

Thereafter, the controller 520 may control the transmitter 512 based on the allocation number to receive the sensor identification code and tire identification code according to the protocol definition. Specifically, the controller 520 may control the transmitter 512 to transmit the power signal to the first sensor module 210 of the first tire 12 located in the location information of the tire corresponding to the allocation number 1, and control the receiver 514 to communicate with the tag of the first tire 12 located in the location information of the tire of which allocation number corresponds to No. 1.

Accordingly, as a power signal is transmitted from the transmitter 512 to the first sensor module 210, the first sensor module 210 may be operated, the receiver 514 may receive the first sensor identification code and communicate with the tag to receive the first tire identification code.

Moreover, the controller 520 may sequentially store the location information of the first tire 12 to which the first sensor module 210 to which the power signal is transmitted is attached, and the received first sensor identification code and first tire identification code, in the packet P.

Subsequently, the controller 520 may control the transmitter 512 to transmit a power signal to the second sensor module 220 of the second tire 14 located in the location information of the tire corresponding to the allocation number 2, and control the receiver 514 to communicate with the tag of the second tire 14 located in the location information of the tire of which the allocation number corresponds to No. 2.

Accordingly, as the power signal is transmitted from the transmitter 512 to the second sensor module 220, the second sensor module 220 may be operated, and the receiver 514 may receive the second sensor identification code and communicate with the tag to receive the second tire identification code.

Moreover, the controller 520 may sequentially store the location information of the second tire 14 to which the second sensor module 220 to which the power signal is transmitted is attached, and the received second sensor identification code and the second tire identification code in the packet P after the first sensor identification code and first tire identification code stored in advance.

When the tire identification codes of all tires of the vehicle 1 and the sensor identification codes of all sensor modules 200 are stored in packet P according to the protocol in the above manner, the controller 520 may transmit the packet P to the communication module 300 and transmit the packet P to the smart tire management server 400.

The storage unit 530 may store the location information of the plurality of tires 10 and the allocation information allocated to each of the plurality of location information.

Meanwhile, when any one of the sensor modules 200 attached to the plurality of tires 10 is damaged or does not work and is replaced with a new sensor module, the controller 520 may store an identification code regarding the new sensor module based on the allocation information. For example, when the first sensor module 210 provided in the first tire 12 is damaged and replaced with a new third sensor module, the controller 520 may control the transmitter 512 to transmit the power signal to the third sensor module. Moreover, the receiver 514 receives the sensor identification code of the third sensor module, the controller 520 may call the existing allocation number 1 to replace the first sensor identification code stored in the packet P with the third sensor identification code.

The tire sensor configuring device 500 according to another embodiment of the present invention may further include at least one of a display unit (not shown) and an operation unit (not shown). Here, the display unit may include a touch pad.

Accordingly, a user may operate the touch pad or the operation unit to store the location information of the plurality of tires 10, the plurality of sensor identification codes, and the plurality of tire identification codes in the packet P according to the protocol, call at least one of the plurality of allocation information, and control the transmitter 512 and receiver 514.

In addition, as the allocation information is called through the controller 520 by operating the touch pad or the operation unit, at least one of the allocation information, the location information of the plurality of tires 10, the plurality of sensor identification codes, and a plurality of tire identification codes may be displayed on the display unit.

In addition, the user may change the allocation information previously stored in the controller into numbers or characters by operating the display unit or the operation unit.

In addition, the user may change the order of allocation numbers allocated to the location information of each tire 10 by operating the display unit or the operation unit. For example, the number 1 allocated to the location information of the first tire 12 may be changed to number 2, and the number 2 allocated to the location information of the second tire 14 may be changed to number 1. In this case, the order of location information of the plurality of tires, the plurality of sensor identification codes, and the plurality of tire identification codes stored in the packet P for each tire location may be changed.

## Claims

1. A tire sensor configuring device (500) comprising:
a transceiver (510) configured to receive a communication module identification code of a communication module (300) provided in a vehicle (1) to communicate with a smart tire management server (400), tire identification codes of a plurality of tires (10) mounted to the vehicle (1), and sensor identification codes of sensor modules (200) respectively attached to the plurality of tires (10); and
a controller (520) configured to arrange the communication module identification code, the tire identification codes, and the sensor identification codes according to a protocol previously created in association with the smart tire management server (400) to form a packet,
wherein the transceiver (510) is configured to transmit the packet to the communication module (300).

2. The tire sensor configuration device of claim 1, wherein the packet further includes location information of the plurality of tires (10).

3. The tire sensor configuration device of claim 1 or 2, wherein the protocol defines a location where the tire identification code and the sensor identification code are stored in the packet for each tire (10).

4. The tire sensor configuration device of any one of claims 1 to 3, wherein the transceiver (510) includes:
a transmitter (512) configured to transmit a communication module identification code request signal to the communication module (300); and
a receiver (514) configured to receive the communication module identification code transmitted from the communication module (300) in accordance with the communication module identification code request signal,
wherein the receiver (514) is configured to receive the sensor identification code and the tire identification code after the receiver (514) receives the communication module identification code.

5. The tire sensor configuration device of claim 4, wherein the transmitter (512) is configured to transmit a power signal for operating the sensor module to the sensor module after the receiver (514) receives the communication module identification code.

6. A smart tire system comprising:
a communication module (300) communicating with a smart tire management server (400), provided in a vehicle (1) including a plurality of tires (10), and configured to store a communication module identification code;
a sensor module provided in each of the plurality of tires (10) and storing a sensor identification code;
a tag provided in each of the plurality of tires (10) and storing a tire identification code; and
a tire sensor configuring device (500) communicating with the communication module (300), the sensor module, and the tag,
wherein the tire sensor configuring device (500) includes:
a controller (520) configured to arrange the communication module identification code transmitted from the communication module (300), the sensor identification code transmitted from the sensor module, and the tire identification code transmitted from the tag according to a protocol previously created in association with the smart tire management server (400) to form a packet; and
a transceiver (510) configured to transmit the packet to the communication module (300).

7. The smart tire system of claim 6, wherein the protocol defines a location where the tire identification code and the sensor identification code are stored in the packet for each tire (10).

## Patentansprüche

1. Reifensensorkonfigurationsvorrichtung (500), umfassend:
einen Sendeempfänger (510), der so konfiguriert ist, dass er einen Kommunikationsmodul-Identifikationscode eines Kommunikationsmoduls (300), das in einem Fahrzeug (1) bereitgestellt ist, um mit einem intelligenten Reifenverwaltungsserver (400) zu kommunizieren, Reifen-Identifikationscodes einer Mehrzahl von Reifen (10), die an dem Fahrzeug montiert sind, und Sensor-Identifikationscodes von Sensormodulen (200), die jeweils an der Mehrzahl von Reifen (10) angebracht sind, empfängt; und
eine Steuerung (520), die so konfiguriert ist, dass sie den Kommunikationsmodul-Identifikationscode, die Reifen-Identifikationscodes und die Sensor-Identifikationscodes gemäß einem Protokoll anordnet, das zuvor in Verbindung mit dem intelligenten Reifenverwaltungsserver (400) erstellt wurde, um ein Paket zu bilden,
wobei der Sendeempfänger (510) so konfiguriert ist, dass er das Paket an das Kommunikationsmodul (300) sendet.

2. Reifensensorkonfigurationsvorrichtung nach Anspruch 1, wobei das Paket weiterhin Ortsinformationen der Mehrzahl von Reifen (10) enthält.

3. Reifensensorkonfigurationsvorrichtung nach Anspruch 1 oder 2, wobei das Protokoll einen Ort definiert, an dem der Reifen-Identifikationscode und der Sensor-Identifikationscode für jeden Reifen (10) in dem Paket gespeichert sind.

4. Reifensensorkonfigurationsvorrichtung nach einem der Ansprüche 1 bis 3, wobei der Sendeempfänger (510) umfasst:
einen Sender (512), der so konfiguriert ist, dass er ein Anforderungssignal für einen Kommunikationsmodul-Identifikationscode an das Kommunikationsmodul (300) sendet; und
einen Empfänger (514), der so konfiguriert ist, dass er den von dem Kommunikationsmodul (300) entsprechend dem Anforderungssignal für den Kommunikationsmodul-Identifikationscode gesendeten Kommunikationsmodul-Identifikationscode empfängt,
wobei der Empfänger (514) so konfiguriert ist, dass er den Sensor-Identifikationscode und den Reifen-Identifikationscode empfängt, nachdem der Empfänger (514) den Kommunikationsmodul-Identifikationscode empfangen hat.

5. Reifensensorkonfigurationsvorrichtung nach Anspruch 4, wobei der Sendeempfänger (512) so konfiguriert ist, dass er ein Energiesignal zum Betreiben des Sensormoduls an das Sensormodul sendet, nachdem der Empfänger (514) den Kommunikationsmodul-Identifikationscode empfangen hat.

6. Intelligentes Reifensystem, umfassend:
ein Kommunikationsmodul (300), das mit einem intelligenten Reifenverwaltungsserver (400) kommuniziert, in einem Fahrzeug (1) bereitgestellt ist, das eine Mehrzahl von Reifen (10) umfasst, und so konfiguriert ist, dass es einen Kommunikationsmodul-Identifikationscode speichert;
ein Sensormodul, das in jedem der Mehrzahl von Reifen (10) bereitgestellt ist und einen Sensor-Identifikationscode speichert;
ein Tag, das in jedem der Mehrzahl von Reifen (10) bereitgestellt ist und einen Reifen-Identifikationscode speichert; und
eine Reifensensorkonfigurationsvorrichtung (500), die mit dem Kommunikationsmodul (300), dem Sensormodul und dem Tag kommuniziert;
wobei die Reifensensorkonfigurationsvorrichtung (500) umfasst:
eine Steuerung (520), die so konfiguriert ist, dass sie den von dem Kommunikationsmodul (300) gesendeten Kommunikationsmodul-Identifikationscode, den von dem Sensormodul gesendeten Sensor-Identifikationscode und den von dem Tag gesendeten Reifen-Identifikationscode gemäß einem zuvor in Verbindung mit dem intelligenten Reifenverwaltungsserver (400) erstellten Protokoll anordnet, um ein Paket zu bilden; und
einen Sendeempfänger (510), der so konfiguriert ist, dass er das Paket an das Kommunikationsmodul (300) sendet.

7. Intelligentes Reifensystem nach Anspruch 6, wobei das Protokoll einen Ort definiert, an dem der Reifen-Identifikationscode und der Sensor-Identifikationscode für jeden Reifen (10) in dem Paket gespeichert sind.

## Revendications

1. Dispositif de configuration de capteur de pneu (500), comprenant :
un émetteur-récepteur (510) configuré pour recevoir d'un module de communication (300) prévu dans un véhicule (1) un code d'identification de module de communication afin de communiquer avec un serveur de gestion de pneu intelligent (400), des codes d'identification de pneu d'une pluralité de pneus (10) montés sur le véhicule (1), et des codes d'identification de capteur de modules de capteur (200) respectivement fixés à la pluralité de pneus (10) ; et
un contrôleur (520) configuré pour agencer le code d'identification de module de communication, les codes d'identification de pneu et les codes d'identification de capteur conformément à un protocole préalablement créé en association avec le serveur de gestion de pneu intelligent (400) pour former un paquet,
où l'émetteur-récepteur (510) est configuré pour transmettre le paquet au module de communication (300).

2. Dispositif de configuration de capteur de pneu selon la revendication 1, où le paquet comprend en outre des informations d'emplacement de la pluralité de pneus (10).

3. Dispositif de configuration de capteur de pneu selon la revendication 1 ou la revendication 2, où le protocole définit un emplacement où le code d'identification de pneu et le code d'identification de capteur sont stockés dans le paquet pour chaque pneu (10).

4. Dispositif de configuration de capteur de pneu selon l'une des revendications 1 à 3, où l'émetteur-récepteur (510) comprend :
un émetteur (512) configuré pour transmettre au module de communication (300) un signal de demande de code d'identification de module de communication ; et
un récepteur (514) configuré pour recevoir le code d'identification de module de communication transmis par le module de communication (300) en fonction du signal de demande de code d'identification de module de communication,
où le récepteur (514) est configuré pour recevoir le code d'identification de capteur et le code d'identification de pneu après réception du code d'identification de module de communication par le récepteur (514).

5. Dispositif de configuration de capteur de pneu selon la revendication 4, où l'émetteur (512) est configuré pour transmettre au module de capteur un signal de puissance pour activer le module de capteur après réception du code d'identification de module de communication par le récepteur (514).

6. Système de pneu intelligent, comprenant :
un module de communication (300) communiquant avec un serveur de gestion de pneu intelligent (400) prévu dans un véhicule (1) comprenant une pluralité de pneus (10), et configuré pour stocker un code d'identification de module de communication ;
un module de capteur prévu dans chaque pneu de la pluralité de pneus (10) et stockant un code d'identification de capteur ;
une étiquette prévue dans chaque pneu de la pluralité de pneus (10) et stockant un code d'identification de pneu ; et
un dispositif de configuration de capteur de pneu (500) communiquant avec le module de communication (300), le module de capteur et l'étiquette,
où le dispositif de configuration de capteur de pneu (500) comprend :
un contrôleur (520) configuré pour agencer le code d'identification de module de communication transmis par le module de communication (300), le code d'identification de capteur transmis par le module de capteur, et le code d'identification de pneu transmis par l'étiquette conformément à un protocole préalablement créé en association avec le serveur de gestion de pneu intelligent (400) pour former un paquet ; et
un émetteur-récepteur (510) configuré pour transmettre le paquet au module de communication (300).

7. Système de pneu intelligent selon la revendication 6, où le protocole définit un emplacement où le code d'identification de pneu et le code d'identification de capteur sont stockés dans le paquet pour chaque pneu (10).
